# EUROPEAN PATENT APPLICATION

(11) **EP 1 092 680 A1**
(43) Date of publication of application: **18.04.2001**
(21) Application number: 00308700.4
(22) Date of filing: 03.10.2000
(51) Int. Cl.: C01B 31/02, H01J 9/02

(54) **Methods for opening tips of and purifying carbon nanotubes**

(30) Priority: 11.10.1999 KR 9943911; 11.10.1999 KR 9943912; 24.05.2000 KR 0028004
(71) Applicant: Iljin Nanotech Co., Ltd., Seoul (KR); Lee, Cheol-jin, Gunsan-city, Jeonlabuk-do (KR)
(72) Inventor: Lee, Cheol-Jin, Gunsan-City, Jeonlabuk-do (KR); Yoo, Jae-Eun, Seongbuk-gu (KR)
(74) Representative: Browne, Robin Forsythe, Dr.

(57) **Abstract**

A method of opening the tips of and purifying carbon nanotubes using physical energy. In the opening and purification method, crude carbon nanotubes are aligned vertically over a substrate. Next, physical energy is applied to the vertically aligned crude carbon nanotubes at a predetermined height in a direction parallel to the major surface of the substrate, to cut off the tips from the crude carbon nanotubes and remove unnecessary materials adhering to the tips and the outer walls of the crude carbon nanotubes.

## Description

### BACKGROUND OF THE INVENTION

### 1. Field of the Invention

The present invention relates to a method of processing carbon nanotubes, and more particularly, to methods for opening tips of and purifying carbon nanotubes.

### 2. Description of the Related Art

Carbon nanotubes are miniature cylindrical structures with a diameter on the order of a few nanometers and an aspect ratio of 10 to 1000. Carbon nanotubes have a honeycomb-like hexagon pattern in which each carbon atom is combined with three neighboring carbon atoms. Also, carbon nanotubes have conductivity, like metals, or semi-conductivity according to their structures, and application fields of these carbon nanotubes are expected to be extensive.

Carbon nanotubes are known to have superior electron emission capability. Due to these properties, carbon nanotubes are considered to be an ideal material for applications in the manufacture of a variety of display devices including flat panel displays.

Electrons are primarily emitted from the tips of carbon nanotubes, rather than the sides. Thus, for optimum electron emission in applications of electronic devices, carbon nanotubes must be grown vertically aligned over substrate.

Recently, many approaches on mass synthesis of vertically aligned carbon nanotubes have been suggested. In the case where chemical vapor deposition (CVD) using a catalyst, which is one of these approaches, is employed to form carbon nanotubes, the orientation angle at the tips of carbon nanotubes, and the length of carbon nanotubes vary, and thus there is a need for adjusting the orientation angle and length. Moreover, the cavities at the tips of carbon nanotubes are encapsulated with catalytic metal particles, and thus the remaining catalytic metal particles must be removed.

The side walls of carbon nanotubes on the outside consist of graphite with only hexagons, whereas the tips of carbon nanotubes are closed tubes with various shapes including simple cylindrical, corn or polygonal shapes. For this reason, topological defects on the atomic level occur at the tips of carbon nanotubes, which causes deformation of carbon nanotubes.

On the other hand, many methods for synthesizing carbon nanotubes, developed up to now, produce carbonaceous byproducts such as carbon nanoparticles or amorphous particles, along with the growth of carbon nanotubes. Almost all such byproducts are located at the outer walls of carbon nanotubes.

Thus, for applications of carbon nanotubes in electronic devices, using the electron emission properties of carbon nanotubes, the adjusting of the length of carbon nanotubes and the shape of the tips, and purification of crude carbon nanotubes are needed after the synthesis of carbon nanotubes.

To meet these requirements, a thermal treatment technique performed in the air or in an oxygen or ammonia atmosphere, and a surface treatment in a plasma atmosphere, have been adopted. These conventional methods are relatively effective in displacing carbon particles sticking to the surface of carbon nanotubes. However, the methods are insufficient to remove catalytic metal particles from cavities near the tips, and cannot adjust the length of carbon nanotubes.

### SUMMARY OF THE INVENTION

It is a first objective of the present invention to provide a method of opening the tips of carbon nanotubes, by which the length of carbon nanotubes and the shape of tips can be adjusted.

It is a second objective of the present invention to provide a method of purifying carbon nanotubes, in which catalytic metal particles at the tips of carbon nanotubes, and byproducts such as carbon particles, on the outer walls of carbon nanotubes, can be effectively removed.

The first objective of the present invention is achieved by a method of opening the tips of carbon nanotubes, comprising: aligning crude carbon nanotubes vertically over a substrate; applying physical energy to the vertically aligned crude carbon nanotubes at a predetermined height in a direction parallel to the major surface of the substrate, to remove the tips from the crude carbon nanotubes.

Preferably, in applying the physical energy, a current carrying hot wire is used. For this case, before applying the physical energy, the height of the hot wire may be finely adjusted to the predetermined height with respect to the vertically aligned crude carbon nanotubes, and the hot wire may be made to contact the crude carbon nanotubes at the predetermined height.

Preferably, in applying the physical energy, the hot wire is moved parallel to the major surface of the substrate to contact the crude carbon nanotubes. Alternatively, the substrate may be moved to bring the crude carbon nanotubes into contact with the hot wire.

Preferably, the hot wire is formed of chromium (Cr), tungsten (W) or a heat-resistant alloy.

Preferably, in applying the physical energy, a laser beam is used. For this case, a laser beam irradiating point may be finely adjusted to a predetermined height with respect to the crude carbon nanotubes, and then the crude carbon nanotubes may be irradiated with the laser beam at the predetermined height level.

Preferably, a source of the laser beam is one of a KrF laser, ArF laser, ruby laser, argon laser, helium-neon (He-Ne) laser and a carbon dioxide (CO₂) laser.

The second objective of the present invention is achieved by a method of purifying carbon nanotubes, comprising: aligning crude carbon nanotubes vertically over a substrate; applying physical energy to the vertically aligned crude carbon nanotubes at a predetermined height in a direction parallel to the major surface of the substrate, to remove unnecessary materials adhering to the tips and the outer walls of the crude carbon nanotubes.

Preferably, in applying the physical energy, a current carrying hot wire is made to contact the crude carbon nanotubes, or the crude carbon nanotubes are irradiated with a laser beam.

By the opening of tips of carbon nanotubes and the purification of carbon nanotubes according to the present invention, the shape of the tips and the length of carbon nanotubes can be simply adjusted. Also, catalytic metal particles remaining in cavities near the tips of crude carbon nanotubes, and carbon nano particles and other byproducts such as amorphous carbon, which stick to the outer walls of carbon nanotubes, can be effectively removed.

### BRIEF DESCRIPTION OF THE DRAWINGS

The above objectives and advantages of the present invention will become more apparent by describing in detail preferred embodiments thereof with reference to the attached drawings in which:
FIGS. 1A through 1C are sectional views illustrating successive steps of a method of opening the tips of carbon nanotubes and a method of purifying carbon nanotubes according to a preferred embodiment of the present invention;
FIG. 2 is a sectional view illustrating use of a current carrying hot wire as a physical energy applying means, in the opening of the tips and the purification of carbon nanotubes according to the present invention; and
FIG. 3 is a sectional view illustrating use of laser beam as a physical energy applying means, in the opening of the tips and the purification of carbon nanotubes according to the present invention.

### DETAILED DESCRIPTION OF THE INVENTION

The present invention will now be described more fully with reference to the accompanying drawings, in which preferred embodiments of the invention are shown. This invention may, however, be embodied in many different forms and should not be construed as being limited to the embodiments set forth herein. Rather, these embodiments are provided so that this disclosure will be thorough and complete, and will fully convey the concept of the invention to those skilled in the art.

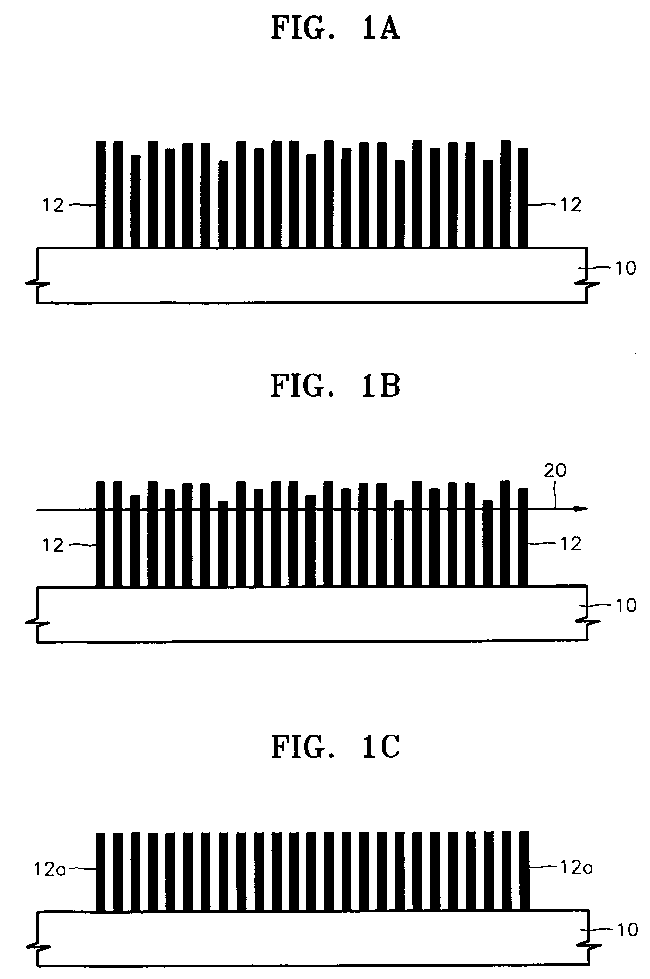

A method of opening the tips of carbon nanotubes and a method of purifying carbon nanotubes according to a preferred embodiment of the present invention will be described with the sectional views shown in FIGS. 1A through 1C.

Firstly, as shown in FIG. 1A, align crude carbon nanotubes straight upwards over a large-sized substrate extending in the horizontal direction. The crude carbon nanotubes 12 vertically aligned over the substrate 10 are directly obtainable by a conventional carbon nanotube synthesis technique that grows carbon nanotubes in the vertical direction over the substrate 10. Alternatively, after the synthesis of carbon nanotubes is completed, the obtained crude carbon nanotubes 12 may be vertically aligned over the substrate 10 by a separate existing aligning technique using conductive polymer and/or miniature apertures.

Referring to FIG. 1B, apply physical energy 20 to the aligned crude carbon nanotubes 12 at a predetermined height, perpendicular to the longitudinal direction of the crude carbon nanotubes 12, i.e., parallel to the major surface of the substrate 10, to burn off the points of carbon nanotubes subjected to the physical energy 20.

As a result, as shown in FIG. 1C, the tips of the crude carbon nanotubes 12 are cut away to give the individual carbon nanotubes 12 with a uniform length. As a result, carbon nanotubes 12a having a desired and uniform length are obtained. The application of the physical energy 20 also contributes to removing catalytic metal particles sticking to the tips of the crude carbon nanotubes 12, and displacing byproducts such as carbon nanoparticles and amorphous carbon from the outer walls of the crude carbon nanotubes 12.

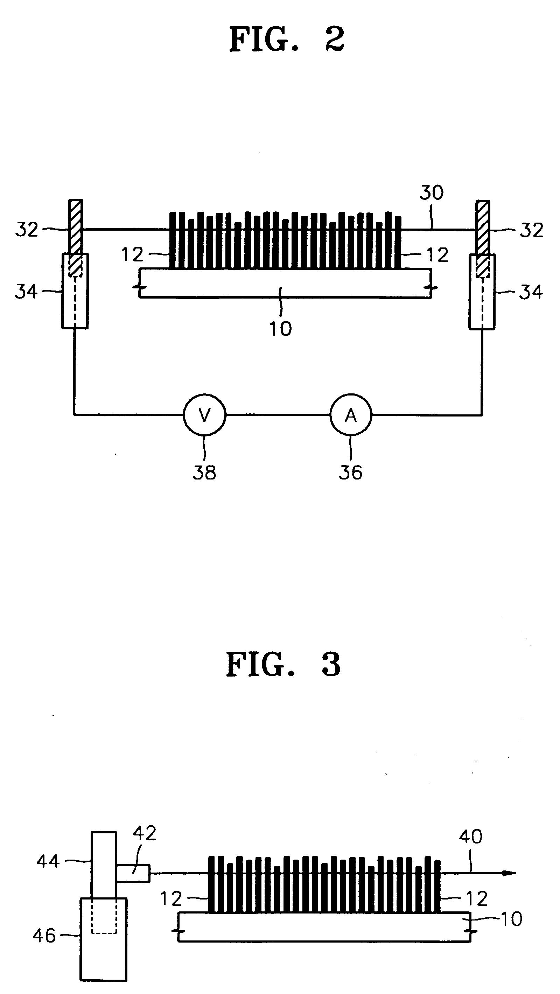

FIGS. 2 and 3 illustrate a technique of applying the physical energy 20 to the crude carbon nanotubes 12. In particular, FIG. 2 shows a case where a current carrying hot wire 30 is adopted as means for applying physical energy 20. As shown in FIG. 2, both ends of the hot wire 30 are connected to electrodes 32, extending in the horizontal direction, parallel to the major surface of the substrate 10. In this state, the hot wire 30 is moved upwards and downwards by fine height adjustment using electrode-height adjuster 34 until the hot wire 30 approaches a desired height of the crude carbon nanotubes 12. Next, while a current is applied to the hot wire 30, the current carrying hot wire 30 is moved in the direction parallel to the major surface of the substrate 10 to bring the hot wire 30 into contact with the vertically aligned crude carbon nanotubes 12 at the desired height. As a result, the tips of the crude carbon nanotubes 12, at the point of contact with the hot wire 30, are burnt off.

Although the example of FIG. 2 involves moving the hot wire 30 to make contact with the crude carbon nanotubes 12, it is appreciated that the substrate 10 with the vertically aligned crude carbon nanotubes 12 can be moved to contact the hot wire 30 fixed at its position.

The hot wire 30 may be formed of a very thin metal wire, for example, chromium (Cr), tungsten (W) or a heat-resistant alloy wire. A variable amount of current may be applied to the hot wire 30 as needed. In FIG. 2, reference numeral 36 represents an ammeter and reference numeral 38 represents a voltmeter.

An example illustrated in FIG. 3 shows a case where a high-energy laser beam 40 is used as the means for applying physical energy 20. The crude carbon nanotubes 12 are irradiated with the laser beam 40 emitted from a laser gun 42, which is mounted fixed to a laser generator 44 supported by a stand 46, along a path parallel to the major surface of the substrate 10, i.e., in the horizontal direction. In this case, a height adjuster (not shown), such as a finely adjustable lever, is used to slightly move the laser generator 44 supported by the stand 46, to allow the crude carbon nanotubes 12 at a desired height to be irradiated with the laser beam 40. As the laser beam 40 passes through the crude carbon nanotubes 12, the tips of the crude carbon nanotubes 12 are burnt off by the laser beam 40.

A laser source used to irradiate the laser beam 40 may be, for example, a KrF (248 nm) laser, ArF (193 nm) laser, ruby laser, argon laser, helium-neon (He-Ne) laser or a carbon dioxide (CO₂) laser.

In the drawings and specification, typical preferred embodiments of the invention are disclosed and, although specific terms are employed, they are used in a generic and descriptive sense only and not for purposes of limitation.

In the tip opening and purification of carbon nanotubes according to the present invention, physical energy is applied to the crude carbon nanotubes, which are vertically aligned over a large-sized substrate, in a direction parallel to the substrate, to burn off the tips of the crude carbon nanotubes and simultaneously adjust the length thereof.

The method of opening the tips of and purifying carbon nanotubes can accurately and effectively adjust the shape and length of the tips in a simple way, and simultaneously remove catalytic metal particles adhering to the tips, and byproducts such as carbon nanoparticles or amorphous carbon, from the crude carbon nanotubes with efficiency.

While this invention has been particularly shown and described with reference to preferred embodiments thereof, it will be understood by those skilled in the art that various changes in form and details may be made thereto without departing from the spirit and scope of the invention as defined by the appended claims.

## Claims

1. A method of opening the tips of carbon nanotubes, comprising:
aligning crude carbon nanotubes vertically over a substrate;
applying physical energy to the vertically aligned crude carbon nanotubes at a predetermined height in a direction parallel to the major surface of the substrate, to remove the tips from the crude carbon nanotubes.

2. The method of claim 1, wherein, in applying the physical energy, a current carrying hot wire is used.

3. The method of claim 2, before applying the physical energy, further comprising finely adjusting the height of the hot wire to the predetermined height with respect to the vertically aligned crude carbon nanotubes.

4. The method of claim 2 or 3, wherein, in applying the physical energy, the hot wire is made to contact the crude carbon nanotubes at the predetermined height.

5. The method of claim 4, wherein, in applying the physical energy, the hot wire is moved parallel to the major surface of the substrate to contact the crude carbon nanotubes.

6. The method of claim 4, wherein, in applying the physical energy, the substrate is moved to bring the crude carbon nanotubes into contact with the hot wire.

7. The method of claim 2, wherein the hot wire is formed of chromium (Cr), tungsten (W) or a heat-resistant alloy.

8. The method of claim 1, wherein, in applying the physical energy, a laser beam is used.

9. The method of claim 8, before applying the physical energy, further comprising finely adjusting a laser beam irradiating point to a predetermined height with respect to the crude carbon nanotubes.

10. The method of claim 8 or 9, wherein, in applying the physical energy, the crude carbon nanotubes are irradiated with the laser beam at the predetermined height level.

11. The method of claim 8, wherein a source of the laser beam is one of a KrF laser, ArF laser, ruby laser, argon laser, helium-neon (He-Ne) laser and a carbon dioxide (CO₂) laser.

12. A method of purifying carbon nanotubes, comprising:
aligning crude carbon nanotubes vertically over a substrate;
applying physical energy to the vertically aligned crude carbon nanotubes at a predetermined height in a direction parallel to the major surface of the substrate, to remove unnecessary materials adhering to the tips and the outer walls of the crude carbon nanotubes.

13. The method of claim 12, wherein, in applying the physical energy, a current carrying hot wire is made to contact the crude carbon nanotubes.

14. The method of claim 13, wherein the hot wire is formed of chromium (Cr), tungsten (W) or a heat-resistant alloy.

15. The method of claim 12, wherein, in applying the physical energy, the crude carbon nanotubes are irradiated with a laser beam.

16. The method of claim 15, wherein a source of the laser beam is one of a KrF laser, ArF laser, ruby laser, argon laser, helium-neon (He-Ne) laser and a carbon dioxide (CO₂) laser.
